# EUROPÄISCHE PATENTSCHRIFT

(11) **EP 2 653 729 B1**
(45) Veröffentlichungstag und Bekanntmachung des Hinweises auf die Patenterteilung: **04.03.2015**
(21) Anmeldenummer: 12164901.6
(22) Anmeldetag: 20.04.2012
(51) Int. Cl.: F04D 25/08, F04D 29/42, F04D 25/06, H02K 5/02, H02K 11/00, H01L 23/552, F04D 29/58

(54) **Radialgebläse mit einem elektromagnetisch geschützten Ansatzgehäuse für die Steuerelektronik**
Radial fan with an auxiliary electromagnetically protected casing for the control electronics
Ventilateur radial avec un carter auxiliaire protégé électromagnétiquement pour l'électronique de contrôle

(43) Veröffentlichungstag der Anmeldung: 23.10.2013
(73) Patentinhaber: ebm-papst Mulfingen GmbH & Co. KG, 74673 Mulfingen (DE)
(72) Erfinder: Riegler, Peter, Dipl.-Ing., 97944 Boxberg (DE); Günther, Jörg, Dipl.-Design., 74677 Dörzbach (DE); Heli, Thomas, Dipl.-Ing., 74595 Langenburg (DE); Hofmann, Walter, Dipl.-Ing., 74673 Mulfingen (DE)
(74) Vertreter: Patentanwälte Dr. Solf & Zapf

(56) Entgegenhaltungen:
- EP-A1- 2 236 838
- EP-A2- 2 098 733
- WO-A1-2008/146152
- DE-T2- 60 036 767
- JP-A- 8 303 394
- US-A1- 2010 183 457

## Beschreibung

Die vorliegende Erfindung betrifft gemäß dem Oberbegriff des Anspruchs 1 ein Gebläse mit einem Gebläsegehäuse, einem innerhalb des Gebläsegehäuses drehbar angeordneten Gebläserad, einem Elektromotor zum rotierenden Antrieb des Gebläserades sowie mit einem außen an dem Gebläsegehäuse angeordneten, schalenförmigen Ansatzgehäuse, wobei das Ansatzgehäuse eine Motor-Steuerelektronik enthält.

Ein solches Gebläse ist in einer Ausführung als Radialgebläse durch das Dokument EP 2 236 838 A1 bekannt. Hierbei ist der das innerhalb des Gebläsegehäuses angeordnete Gebläserad antreibende Elektromotor als Außenläufermotor ausgebildet und innerhalb des Radial-Laufrades angeordnet. Zudem ist der Elektromotor als ein elektronisch kommutierter Gleichstrommotor, häufig auch EC-Motor genannt, ausgebildet, weshalb zur elektronischen Ansteuerung eine Steuerelektronik erforderlich ist. Bei dem bekannten Gebläse ist diese Steuerelektronik in einem so genannten Klemmenkasten untergebracht, der als Ansatzgehäuse außen an dem Gebläsegehäuse befestigt ist. Dieses bekannte Gebläse hat durch den Einsatz eines EC-Motors Vorteile, allerdings hat sich im praktischen Betrieb gezeigt, dass die Laufeigenschaften noch nicht optimal sind.

Ein ähnliches Gebläse ist auch in der EP 0 985 829 B1 beschrieben, wobei ein außen an dem Gebläsegehäuse befestigtes Ansatzgehäuse aber ausschließlich als Klemmenkasten offenbart ist, der außer elektrischen Verbindern zur Anschlussverbindung zwischen Anschlussleitungen des Elektromotors und einem äußeren Anschlusskabel auch einen für Wechselstrommotoren erforderlichen Betriebskondensator enthält.

Schließlich beschreibt die Veröffentlichung EP 1 484 509 B1 eine Doppel-Gebläseanordnung mit zwei von einem gemeinsamen Elektromotor koaxial angetriebenen Radialgebläsen, wobei der Elektromotor außerhalb zwischen den beiden Gebläsegehäusen liegt und über axial entgegengesetzte Wellen die beiden Radial-Laufräder trägt. Auch hierbei ist an einem der beiden Gebläsegehäusen außen ein Klemmenkasten befestigt.

Die Veröffentlichung US 2010/0183457 A1 offenbart ein Ansatzgehäuse für die Steuerelektronik eines Kompressors, wobei ein metallisches Abdeckelement die Steuerelektronik vor einer elektromagnetischen Einstrahlung abschirmt und gleichzeitig als Halbleiter-Kühlelement dient.

Der vorliegenden Erfindung liegt die Aufgabe zu Grunde, ein Gebläse der eingangs beschriebenen, gattungsgemäßen Art mit konstruktiv einfachen Mitteln hinsichtlich der Laufeigenschaften des Elektromotors zu verbessern.

Erfindungsgemäß wird diese Aufgabe durch die Merkmale des unabhängigen Anspruchs 1 gelöst. Vorteilhafte Ausgestaltungsmerkmale der Erfindung sind in den abhängigen Ansprüchen sowie in der anschließenden Beschreibung enthalten.

Demnach ist in erfindungsgemäßer Ausgestaltung zunächst vorgesehen, dass das Ansatzgehäuse in seinem dem Gebläsegehäuse zugewandten Anbindungsbereich ein metallisches, die Motor-Steuerelektronik überdeckendes und vor einer elektromagnetischen Einstrahlung von dem Elektromotor abschirmendes Abdeckelement aufweist.

Dieses Erfindungsmerkmal basiert auf der Erkenntnis, dass im Betriebszustand der rotierende Elektromotor einen nachteiligen elektromagnetischen Einfluss auf die Steuerelektronik hat, weil die Steuerelektronik wegen der Unterbringung in dem Ansatzgehäuse recht nahe an dem Elektromotor liegt. Deshalb kann es zu einer Einkoppelung von elektromagnetischer Strahlung in die Steuerelektronik kommen, die dadurch nachteilig beeinflusst werden kann, woraus eine hinsichtlich der Betriebseigenschaften, wie z. B. Laufruhe des Motors, nicht ganz optimale Motor-Ansteuerung resultieren kann.

Durch das erfindungsgemäße Abdeckelement wird dieser elektromagnetische Einfluss vorteilhafterweise eliminiert oder zumindest deutlich reduziert, indem das Abdeckelement die von dem Elektromotor erzeugte elektromagnetische Strahlung abschirmt, so dass eine Einkoppelung in die Steuerelektronik vermieden wird. Somit bildet das Abdeckelement einen "EMV-Schild" (EMV = Elektromagnetische Verträglichkeit). Durch den erreichten Schutz gegen elektromagnetische Einkoppelungen werden verbesserte Laufeigenschaften gewährleistet.

In weiterer vorteilhafter Ausgestaltung der Erfindung ist das Abdeckelement derart ausgebildet, dass es noch weitere Zusatzfunktionen erfüllt, so dass es sich um ein multifunktionelles Bauteil handelt.

So kann das Abdeckelement, welches ohnehin für seine Funktion als "EMV-Schild" erfindungsgemäß einen Erdleiter-Anschluss aufweist, auch zur Erdungs-Durchführung ausgebildet sein, indem es zwei an entgegengesetzten Seitenbereichen angeordnete Erdleiter-Anschlüsse aufweist. Konkret kann eine Erdleiterverbindung von einer motorseitigen Statorerdung aus an einer Seite des Abdeckelementes angeschlossen werden. Die Erdung wird über das Abdeckelement zur anderen Seite geleitet und kann dort über eine Steckverbindung mit einer äußeren Erdleitung verbunden werden. Es ergibt sich somit eine mit Abstand über die Steuerelektronik hinweg verlaufende Funktionserdung, die wegen der räumlichen Trennung von der Steuerelektronik eine EMV-Einkoppelung sehr effektiv verhindert.

Weiterhin ist erfindungsgemäß das Abdeckelement zusätzlich als Halbleiter-Kühlelement ausgebildet. Dazu weist das Abdeckelement mindestens einen formgeprägten Anlagebereich auf, der im montierten Zustand zur Wärmeübertragung an einem Halbleiter-Bauteil der Steuerelektronik zur Anlage gelangt. Wenn die Steuerelektronik mehrere zu kühlende Halbleiter-Bauteile aufweist, kann das Abdeckelement mit einer entsprechenden Anzahl von solchen formgeprägten Anlagebereichen ausgebildet sein. Die von dem jeweiligen Halbleiter-Bauteil erzeugte Verlustwärme wird somit von dem Abdeckelement aufgenommen und an die Umgebung abgegeben. Dazu kann es zusätzlich vorteilhaft sein, wenn das Abdeckelement Flächenbereiche aufweist, die zur Anlage an dem Gebläsegehäuse an dessen Form angepasst sind. Hierdurch wird eine Wärmeübertragung an die geförderte, innerhalb des Gebläsegehäuses strömende Luft über die Gehäusewandung erreicht. Zusätzlich kann die Gehäusewandung im Anlagebereich des Abdeckelementes mindestens eine Öffnung aufweisen, durch die hindurch das Abdeckelement unmittelbar von der geförderten Luft überströmt und dadurch effektiv gekühlt wird.

Schließlich bildet das Ansatzgehäuse mit der Steuerelektronik und dem erfindungsgemäßen Abdeckelement eine vormontierte Baugruppe, die berührungssicher innerbetrieblich bis zu ihrer Montageverbindung mit dem Gebläsegehäuse gehandhabt und transportiert werden kann. Hierbei fungiert das Abdeckelement vorteilhafterweise durch seine Verbindung mit dem Ansatzgehäuse auch als mechanisches Versteifungselement, so dass das Ansatzgehäuse auch als preiswertes Formteil aus Kunststoff bestehen kann. Die mechanische Stabilität wird somit hauptsächlich durch das metallische Abdeckelement erreicht.

Anhand eines in den Zeichnungen veranschaulichten, bevorzugten Ausführungsbeispiels soll die Erfindung im Folgenden weitergehend erläutert werden. Es zeigen:
- Fig. 1: eine Perspektivansicht eines erfindungsgemäßen Gebläses, beispielhaft in einer Ausführung als Doppel-Radialgebläse,
- Fig. 2: eine gesonderte Perspektivansicht auf die gehäuseseitige Innenseite eines eine Steuerelektronik enthaltenden Ansatzgehäuses,
- Fig. 3: eine perspektivische Explosionsdarstellung zu Fig. 2,
- Fig. 4: einen Längsschnitt in der Schnittebene IV-IV gemäß Fig. 2 und
- Fig. 5: eine Ausschnittvergrößerung des Bereiches V in Fig. 4.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

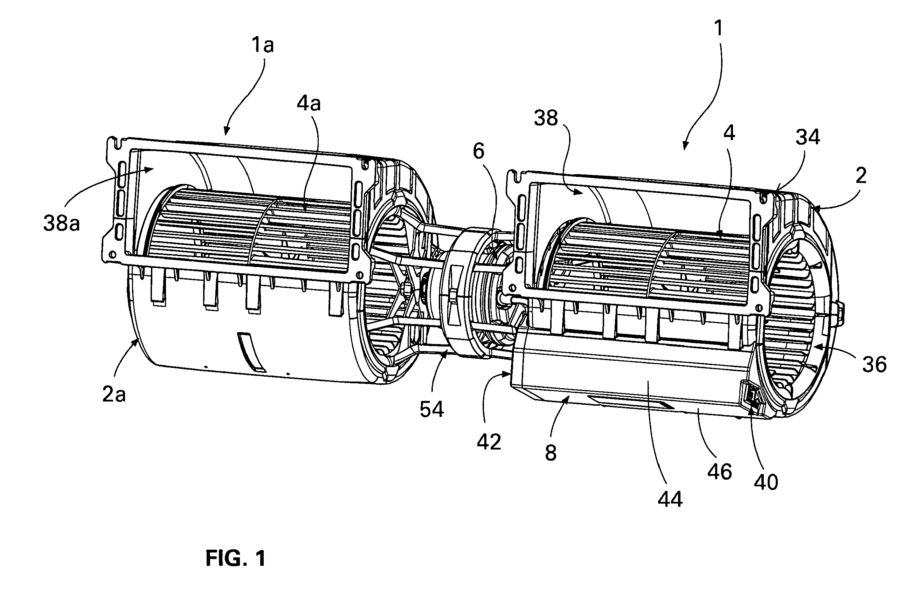

Wie sich zunächst aus Fig. 1 ergibt, besteht ein erfindungsgemäßes Gebläse 1 aus einem Gebläsegehäuse 2, einem innerhalb des Gebläsegehäuses 2 drehbar angeordneten Gebläserad 4 sowie einem Elektromotor 6 zum rotierenden Antrieb des Gebläserades 4. Weiterhin ist außen an dem Gebläsegehäuse 2 ein schalenförmiges Ansatzgehäuse 8 angeordnet.

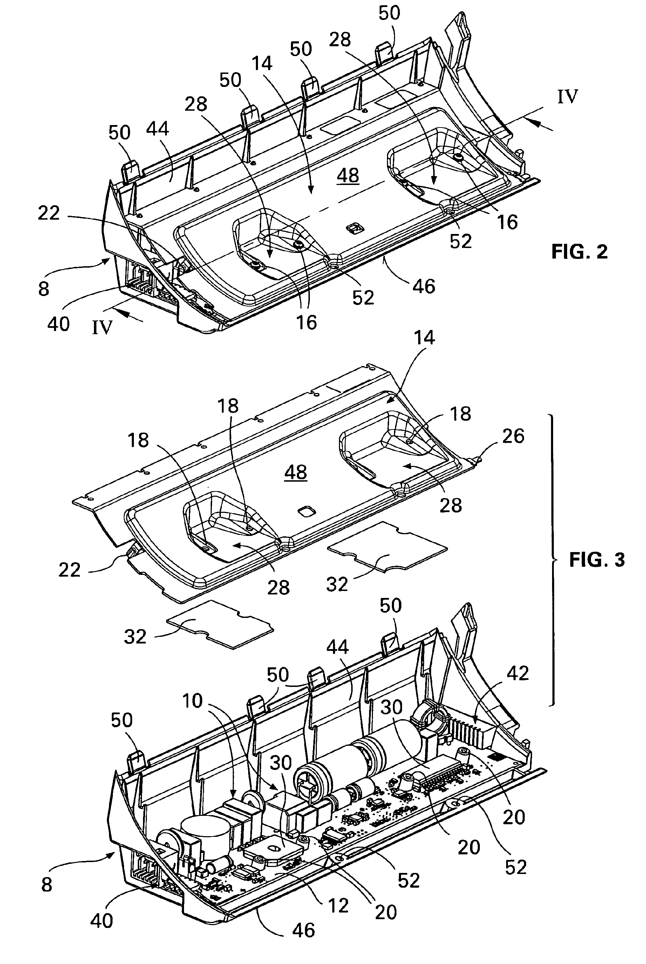

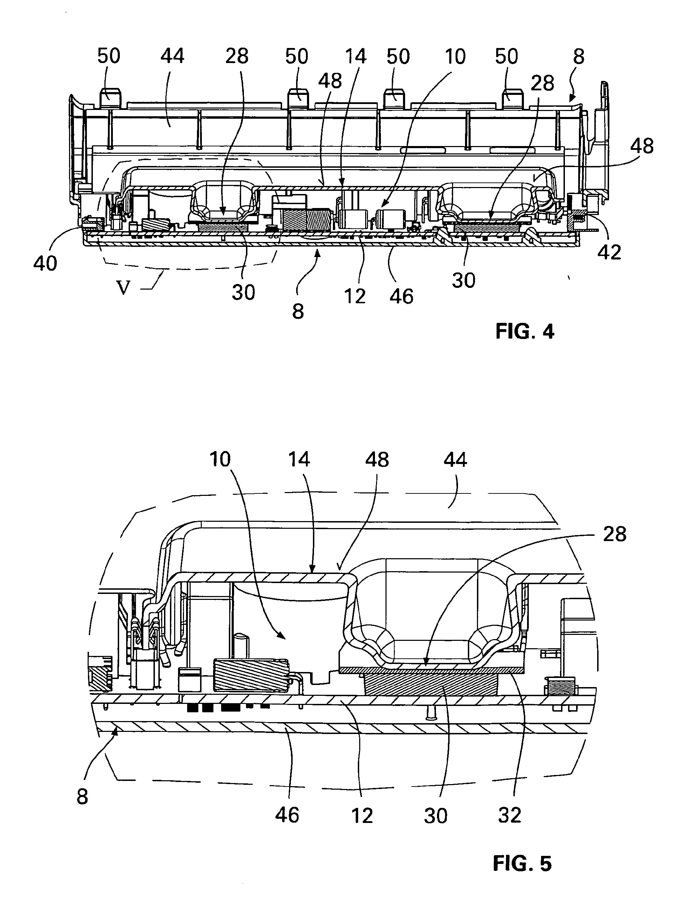

Wie sich aus den gesonderten Darstellungen in Fig. 2 bis 5 ergibt, enthält dieses Ansatzgehäuse 8 eine Steuerelektronik 10 zur elektronischen Ansteuerung des Elektromotors 6. Der Elektromotor 6 ist bevorzugt als elektronisch kommutierter Gleichstrommotor, d. h. als EC-Motor, ausgebildet. Daher dient die Steuerelektronik 10 zur elektronischen Kommutierung von nicht erkennbaren Statorwicklungen des Elektromotors 6 sowie auch zur Drehzahlsteuerung oder -regelung. Gemäß Fig. 3 ist die Steuerelektronik 10 mit ihren erforderlichen Bauteilen auf einer Leiterplatte 12 angeordnet. Dazu wird auch auf die Schnittansichten in Fig. 4 und 5 verwiesen.

Wie sich weiterhin aus Fig. 2 bis 5 ergibt, weist das Ansatzgehäuse 8 erfindungsgemäß in seinem dem Gebläsegehäuse 2 zugewandten, gemäß Fig. 3 eigentlich offenen Anbindungsbereich ein metallisches Abdeckelement 14 auf, welches die Motor-Steuerelektronik 10 überdeckt und vor einer elektromagnetischen Einstrahlung von dem Elektromotor 6 abschirmt. Zweckmäßig ist das Abdeckelement 14 als Metallblech-Formteil ausgebildet, es besteht somit aus einem formgeprägten und/oder formgebogenen Metallblech, insbesondere Stahlblech. Die Form ist am besten in Fig. 2 und 3 zu erkennen.

Daraus ergibt sich weiterhin, dass das Abdeckelement 14 mit dem Ansatzgehäuse 8 und der Steuerelektronik 10 vorteilhafterweise zu einer vormontierten Steuerbaugruppe verbunden ist. Dazu wird gemäß Fig. 2 und 3 das Abdeckelement 14 in seiner die Steuerelektronik 10 abdeckenden Lage über Schrauben 16 an dem Ansatzgehäuse 8 befestigt. Die Schrauben 16 werden durch Schraublöcher 18 des Abdeckelementes 14 geführt und in Schrauböffnungen 20 innerhalb des Ansatzgehäuses 8 eingeschraubt.

In dem so verbundenen Zustand fungiert das Abdeckelement 14 auch als Berührungsschutz für die Steuerelektronik 10 vor der Endmontage der Steuerbaugruppe durch Anbringung am Gebläsegehäuse 2.

Gemäß Fig. 3 weist das Abdeckelement 14 mindestens einen Erdleiter-Anschluss 22 auf. Dieser Erdleiter-Anschluss 22 greift zur Kontaktierung in der montierten Lage in ein auf der Leiterplatte 12 angeordnetes Kontaktelement 24 ein. In weiterer bevorzugter Ausgestaltung weist das Abdeckelement 14 mindestens einen zweiten Erdleiter-Anschluss 26 auf, wobei die beiden Erdleiter-Anschlüsse 22, 26 zur Erdungs-Durchleitung an zwei entgegengesetzten Seitenbereichen des Abdeckelementes 14 angeordnet sind.

In weiterer vorteilhafter Ausgestaltung ist das Abdeckelement 14 zusätzlich als Halbleiter-Kühlelement ausgebildet. Dazu weist das Abdeckelement 14 mindestens einen formgeprägten Anlagebereich 28 zur flächigen Anlage an einem Halbleiter-Bauteil 30 der Steuerelektronik 10 auf. In der dargestellten, bevorzugten Ausführung weist das Abdeckelement 14 zwei solche Anlagebereiche 28 auf. Indem der bzw. jeder Anlagebereich 28 flächig zur Anlage an dem jeweiligen Bauteil 30 gelangt, wird die im Betrieb entstehende Verlustwärme aus dem Bauteil 30 über das als Kühlelement fungierende Abdeckelement 14 abgeführt. Dazu kann es zweckmäßig sein, wenn zwischen dem/jedem Anlagebereich 28 des Abdeckelementes 14 und dem zugehörigen Halbleiter-Bauteil 30 eine wärmeleitende Schicht 32 angeordnet ist, siehe dazu insbesondere den vergrößerten Schnitt in Fig. 5. Als wärmeleitende Schicht 32 kann beispielsweise eine geeignete Wärmeleitfolie eingesetzt werden, siehe Fig. 3.

Durch seine mechanische Verbindung mit dem Ansatzgehäuse 8 fungiert das metallische Abdeckelement 14 vorteilhafterweise auch als mechanisches Versteifungselement. Deshalb kann das Ansatzgehäuse 8 mit Vorteil als Formteil aus Kunststoff bestehen.

Das Gebläse 1 ist in der bevorzugten Ausführung als Radialgebläse ausgebildet, siehe Fig. 1. Dabei ist das Gebläserad 4 als übliches Radial-Laufrad ausgebildet. Das Gebläsegehäuse 2 bildet ein Spiralgehäuse mit einer das Laufrad 4 umschließenden Umfangswandung 34 und mindestens einer axialen Einströmöffnung 36. Vorzugsweise handelt es sich allerdings um eine doppelseitig saugende Ausführung mit zwei gegenüberliegenden axialen Einströmöffnungen 36. Die Umfangswandung 34 erweitert sich spiralartig von einem kleineren Radius bis zu einem größeren Radius und geht dann in eine tangentiale Ausblasöffnung 38 über. Die Richtung, in der sich über den Umfang hinweg der Radius der Umfangswandung 34 vergrößert, entspricht der Rotationsrichtung des Gebläserades 4.

Bei dieser Ausführung ist zweckmäßig vorgesehen, dass das Ansatzgehäuse 8 in einem Bereich der Umfangswandung 34 angeordnet ist, der mit kleinerem Radius benachbart zu der Ausblasöffnung 38 liegt. Durch die zum Gebläserad 4 tangentiale Ausrichtung der Ausblasöffnung 38 ergibt sich in diesem Bereich zwischen der Umfangswandung 34 und der Ausblasöffnung 38 außenseitig ein zwickelartiger Winkelbereich, der vorteilhaft zur Unterbringung des Ansatzgehäuses 8 genutzt wird. Hierbei ist es zudem vorteilhaft, wenn sich das Ansatzgehäuse 8 über die gesamte axial gemessene Breite des Gebläsegehäuses 2 erstreckt. Auf diese Weise ergibt sich ein größtmöglicher Bauraum zur Aufnahme der Steuerelektronik 10 bei geringstmöglichem radialen Überstand des Ansatzgehäuses 8 vom Gebläsegehäuse 2.

Somit weist das Ansatzgehäuse 8 eine längliche, sich parallel zur Rotationsachse des Gebläserades 4 erstreckende Bauform mit zwei gegenüberliegenden Stirnseiten auf. Im Bereich dieser beiden gegenüberliegenden Stirnseiten weist das Ansatzgehäuse 8 jeweils ein elektrisches Anschlusselement 40, 42 auf, einerseits für äußere Anschlussleitungen (nicht dargestellt) und andererseits für zum Elektromotor 6 führende Motorleitungen (in den Zeichnungen ebenfalls nicht erkennbar). Die Anschlusselemente 40, 42 sind bevorzugt als Steckverbinder ausgebildet. Weiterhin ist mit Vorteil vorgesehen, dass das Ansatzgehäuse 8 - in einem zur Rotationsachse des Gebläserades 4 senkrechten Querschnitt gesehen - dreieckförmig mit zwei zueinander etwa rechtwinkligen Wandungen 44, 46 und einer von dem Abdeckelement 14 überdeckten, nicht bezeichneten Öffnung ausgebildet ist. Eine der Wandungen, gemäß Fig. 4 und 5 die Wandung 46, bildet eine Bodenwandung, auf der die Leiterplatte 12 mit der Steuerelektronik 10 befestigt ist.

Das Abdeckelement 14 weist zudem Flächenbereiche 48 auf, die zur Anlage an dem Gebläsegehäuse 2 bzw. an dessen Umfangswandung 34 an deren gekrümmte Form angepasst sind. Hierdurch wird erreicht, dass von dem/jedem Bauteil 30 aufgenommene Wärme über das Abdeckelement 14 abgeführt und weiter über die Umfangswandung 34 an die geförderte Luftströmung weitergegeben wird. Hierbei kann es vorteilhaft sein, im Anlagebereich der Flächenbereiche 48 des Abdeckelementes 14 in der Umfangswandung 34 mindestens eine Öffnung zu bilden, wodurch die geförderte Luft in diesen Bereichen das Abdeckelement 14 unmittelbar kontaktieren und kühlen kann.

Wie sich noch aus Fig. 2 bis 4 ergibt, weist das Ansatzgehäuse 8 zur Montageverbindung mit dem Gebläsegehäuse 2 an einem Längsseitenrand der einen Wandung 44 Halteansätze 50 zum Eingriff in korrespondierende Halteöffnungen des Gebläsegehäuses 2 auf. An einem gegenüberliegenden Längsseitenrand der anderen Wandung 46 sind Schraubenlöcher 52 für nicht dargestellte Halteschrauben vorgesehen.

Wie schließlich noch in Fig. 1 dargestellt ist und einleitend auch bereits erwähnt wurde, ist das erfindungsgemäße Gebläse 1 vorzugsweise Bestandteil eines Doppel-Gebläses. Dabei ist der Elektromotor 6 außerhalb des Gebläsegehäuses 2 axial mittig zwischen letzterem und einem zweiten, etwa gleichartigen Gebläse 1a angeordnet. Der Elektromotor 6 ist über zwei axial entgegengesetzte, gleichachsige Wellen (nicht bezeichnet) mit den zwei Gebläserädern 4, 4a verbunden. Im Übrigen entspricht das zweite Gebläse 1 a der zuvor erläuterten Ausgestaltung des ersten Gebläses 1, abgesehen davon, dass nur eines der beiden Gebläse, wie dargestellt das Gebläse 1, das Ansatzgehäuse 8 mit der Steuerelektronik 10 aufweist.

Im Übrigen entspricht die Ausgestaltung des Doppel-Gebläses auch weitgehend dem eingangs erwähnten Dokument EP 1 484 509 B1, wonach der Elektromotor 6 zusammen mit den über die Wellen verbundenen Gebläserädern 4, 4a eine Lüfterbaugruppe bildet, die über einen Träger 54 zwischen den beiden Gebläsegehäusen 2, 2a aufgehängt ist. Die Montage des Doppel-Gebläses erfolgt über die mit jeweils einem flanschartigen Umfangsrand ausgebildeten Ausblasöffnungen 38, 38a, indem diese an einer nicht dargestellten ortsfesten Konsole befestigt (angeflanscht) werden.

Die von dem Ansatzgehäuse 8, der Steuerelektronik 10 und dem Abdeckelement 14 gebildete Steuerbaugruppe kann mit Vorteil auch mit der erwähnten Lüfterbaugruppe zu einem so genannten Antriebsstrang vormontiert werden, wozu das Ansatzgehäuse 8 einseitig an dem Träger 54 befestigt wird. Dieser vormontierte Antriebsstrang kann dann in einer abschließenden Montage mit den beiden - eine Gehäusebaugruppe bildenden - Gebläsegehäusen 2, 2a verbunden werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben.

## Patentansprüche

1. Gebläse (1) mit einem Gebläsegehäuse (2), einem innerhalb des Gebläsegehäuses (2) drehbar angeordneten Gebläserad (4), einem Elektromotor (6) zum rotierenden Antrieb des Gebläserades (4) sowie mit einem außen an dem Gebläsegehäuse (2) angeordneten, schalenförmigen Ansatzgehäuse (8), wobei das Ansatzgehäuse (8) eine Motor-Steuerelektronik (10) enthält,
**dadurch gekennzeichnet, dass** das Ansatzgehäuse (8) in seinem dem Gebläsegehäuse (2) zugewandten Anbindungsbereich ein metallisches, die Motor-Steuerelektronik (10) überdeckendes und vor einer elektromagnetischen Einstrahlung von dem Elektromotor (6) abschirmendes Abdeckelement (14) aufweist, wobei das Abdeckelement (14) mindestens einen Erdleiter-Anschluss (22) aufweist und als Halbleiter-Kühlelement ausgebildet ist, wobei das Abdeckelement (14) mindestens einen formgeprägten Anlagebereich (28) zur Wärme-übertragenden Anlage an einem Halbleiter-Bauteil (30) der Steuerelektronik (10) aufweist.

2. Gebläse nach Anspruch 1,
**dadurch gekennzeichnet, dass** das Abdeckelement (14) als Metallblech-Formteil ausgebildet ist.

3. Gebläse nach Anspruch 1 oder 2,
**dadurch gekennzeichnet, dass** das Abdeckelement (14) mit dem Ansatzgehäuse (8) und der Steuerelektronik (10) zu einer vormontierten Baugruppe verbunden ist.

4. Gebläse nach einem der Ansprüche 1 bis 3,
**dadurch gekennzeichnet, dass** das Abdeckelement (14) zwei an entgegengesetzten Seitenbereichen angeordnete Erdleiter-Anschlüsse (22, 26) zur Erdungs-Durchleitung aufweist.

5. Gebläse nach einem der Ansprüche 1 bis 4,
**dadurch gekennzeichnet, dass** zwischen dem/jedem Anlagebereich (28) des Abdeckelementes (14) und dem Halbleiter-Bauteil (30) eine wärmeleitende Schicht (32) angeordnet ist.

6. Gebläse nach einem der Ansprüche 1 bis 5,
**dadurch gekennzeichnet, dass** das Ansatzgehäuse (8) als Formteil aus Kunststoff besteht, wobei das metallische Abdeckelement (14) durch seine Verbindung mit dem Ansatzgehäuse (8) als mechanisches Versteifungselement fungiert.

7. Gebläse nach einem der Ansprüche 1 bis 6,
**gekennzeichnet durch** eine Ausgestaltung als Radialgebläse, wobei das Gebläserad (4) als Radiallaufrad und das Gebläsegehäuse (2) als Spiralgehäuse mit einer das Laufrad (4) umschließenden Umfangswandung (34), mindestens einer axialen Einströmöffnung (36) und einer tangentialen Ausblasöffnung (38) ausgebildet sind, und wobei sich die Umfangswandung (34) spiralartig von einem kleineren Radius bis zu einem größeren Radius erweitert.

8. Gebläse nach Anspruch 7,
**dadurch gekennzeichnet, dass** das Ansatzgehäuse (8) in einem Bereich der Umfangswandung (34) angeordnet ist, der mit kleinerem Radius benachbart zu der Ausblasöffnung (38) liegt.

9. Gebläse nach einem der Ansprüche 1 bis 8,
**dadurch gekennzeichnet, dass** das Ansatzgehäuse (8) eine längliche, sich parallel zur Rotationsachse des Gebläserades (4) über die gesamte, axial gemessene Breite des Gebläsegehäuses (2) erstreckende Bauform mit zwei gegenüberliegenden Stirnseiten aufweist.

10. Gebläse nach Anspruch 9,
**dadurch gekennzeichnet, dass** das Ansatzgehäuse (8) im Bereich seiner beiden gegenüberliegenden Stirnseiten jeweils ein elektrisches Anschlusselement (40, 42) aufweist, einerseits für äußere Anschlussleitungen und andererseits für zum Elektromotor (6) führende Motorleitungen.

11. Gebläse nach einem der Ansprüche 1 bis 10,
**dadurch gekennzeichnet, dass** das Ansatzgehäuse (8) - in einem zur Rotationsachse des Gebläserades (4) senkrechten Querschnitt gesehendreieckförmig mit zwei zueinander etwa rechtwinkligen Wandungen (44, 46) und einer von dem Abdeckelement (14) überdeckten Öffnung ausgebildet ist.

12. Gebläse nach einem der Ansprüche 1 bis 11,
**dadurch gekennzeichnet, dass** das Ansatzgehäuse (8) zur Montageverbindung mit dem Gebläsegehäuse (2) an einem Seitenrand Halteansätze (50) zum Eingreifen in Halteöffnungen des Gebläsegehäuses (2) und an einem gegenüberliegenden Seitenrand Schraubenlöcher (52) für Halteschrauben aufweist.

13. Gebläse nach einem der Ansprüche 1 bis 12,
**gekennzeichnet durch** eine Ausgestaltung als Doppel-Gebläse, wobei der Elektromotor (6) außerhalb des Gebläsegehäuses (2) axial zwischen letzterem und einem zweiten, gleichartigen Gebläse (1a) angeordnet ist, und wobei der Elektromotor (6) über zwei axial entgegengesetzte gleichachsige Wellen mit den zwei Gebläserädern (4, 4a) verbunden ist.

14. Gebläse nach Anspruch 13,
**dadurch gekennzeichnet, dass** der Elektromotor (6) über einen Träger (54) zwischen den zwei Gebläsegehäusen (2, 2a) aufgehängt ist.

## Claims

1. A fan (1) with a fan housing (2), a fan wheel (4) arranged rotatable within the fan housing (2), an electric motor (6) for rotating driving of the fan wheel (4), and with a shell-shaped attachment housing (8) arranged externally on the fan housing (2), the attachment housing (8) containing motor control electronics (10),
**characterised in that** the attachment housing (8) in its attachment region facing the fan housing (2) has a metallic covering element (14) which covers the motor control electronics (10) and shields it against electromagnetic radiation from the electric motor (6), the covering element (14) having at least one earth-conductor connection (22) and being formed as a semiconductor-cooling element, with the covering element (14) having at least one stamped contact region (28) for heat-transferring contact on a semiconductor component (30) of the control electronics (10).

2. A fan according to Claim 1, **characterised in that** the covering element (14) is formed as a shaped sheet-metal part.

3. A fan according to Claim 1 or 2, **characterised in that** the covering element (14) is connected to the attachment housing (8) and the control electronics (10) to form a pre-assembled subassembly.

4. A fan according to one of Claims 1 to 3, **characterised in that** the covering element (14) has two earth-conductor connections (22, 26) arranged on opposing side regions for transmitting earthing.

5. A fan according to one of Claims 1 to 4, **characterised in that** a heat-conducting layer (32) is arranged between the/each contact region (28) of the covering element (14) and the semiconductor component (30).

6. A fan according to one of Claims 1 to 5, **characterised in that** the attachment housing (8) as a shaped part consists of plastics material, the metallic covering element (14) acting as a mechanical reinforcement element by its connection to the attachment housing (8).

7. A fan according to one of Claims 1 to 6, **characterised by** a configuration as a radial fan, with the fan wheel (4) being formed as a radial impeller and the fan housing (2) being formed as a spiral housing with a peripheral wall (34) surrounding the impeller (4), at least one axial inflow opening (36) and a tangential outlet opening (38), and the peripheral wall (34) widening in a spiral from a smaller radius up to a larger radius.

8. A fan according to Claim 7, **characterised in that** the attachment housing (8) is arranged in a region of the peripheral wall (34) which lies with a smaller radius adjacent to the outlet opening (38).

9. A fan according to one of Claims 1 to 8, **characterised in that** the attachment housing (8) has an elongate shape extending parallel to the axis of rotation of the fan wheel (4) over the entire axially measured width of the fan housing (2) with two opposing end faces.

10. A fan according to Claim 9, **characterised in that** the attachment housing (8) in the region of its two opposing end faces has in each case an electrical connection element (40, 42), on one hand for outer connecting lines and on the other hand for motor lines leading to the electric motor (6).

11. A fan according to one of Claims 1 to 10, **characterised in that** the attachment housing (8) - viewed in a cross-section perpendicular to the axis of rotation of the fan wheel (4) - is formed to be triangular with two walls (44, 46) which are approximately at right-angles to one another and an opening covered by the covering element (14).

12. A fan according to one of Claims 1 to 11, **characterised in that** the attachment housing (8) for assembly connection with the fan housing (2) has on one lateral edge holding projections (50) for engaging in holding openings in the fan housing (2), and on an opposing lateral edge screw holes (52) for retaining screws.

13. A fan according to one of Claims 1 to 12, **characterised by** a configuration as a double fan, the electric motor (6) being arranged outside the fan housing (2) axially between the latter and a second fan (1a) of the same type, and the electric motor (6) being connected to the two fan wheels (4, 4a) via two axially opposed coaxial shafts.

14. A fan according to Claim 13, **characterised in that** the electric motor (6) is suspended between the two fan housings (2, 2a) by means of a support (54).

## Revendications

1. Ventilateur (1) comprenant un carter de ventilateur (2), une roue de ventilateur (4) disposée de manière à pouvoir tourner à l'intérieur du carter de ventilateur (2), un moteur électrique (6) servant à entraîner en rotation la roue de ventilateur (4), ainsi qu'un carter auxiliaire (8) présentant une forme de coque, disposé à l'extérieur au niveau du carter de ventilateur (2), dans lequel le carter auxiliaire (8) contient une électronique de commande de moteur (10),
**caractérisé en ce que** le carter auxiliaire (8) présente, dans sa zone d'attache tournée vers le carter de ventilateur (2), un élément de recouvrement (14) métallique recouvrant l'électronique de commande de moteur (10) et protégeant contre un rayonnement électromagnétique en provenance du moteur électrique (6), dans lequel l'élément de recouvrement (14) présente au moins un branchement à la terre (22) et est réalisé sous la forme d'un élément de refroidissement semi-conducteur, dans lequel l'élément de recouvrement (14) présente au moins une zone d'appui (28) moulée par estampage, destinée à venir en appui en transmettant de la chaleur au niveau d'un composant semi-conducteur (30) de l'électronique de commande (10).

2. Ventilateur selon la revendication 1,
**caractérisé en ce que** l'élément de recouvrement (14) est réalisé sous la forme d'une pièce moulée en tôle métallique.

3. Ventilateur selon la revendication 1 ou 2,
**caractérisé en ce que** l'élément de recouvrement (14) est relié au carter auxiliaire (8) et à l'électronique de commande (10) pour former un groupe modulaire préalablement monté.

4. Ventilateur selon l'une quelconque des revendications 1 à 3,
**caractérisé en ce que** l'élément de recouvrement (14) présente deux branchements à la terre (22, 26) disposés au niveau de zones latérales opposées aux fins du passage du câble de terre.

5. Ventilateur selon l'une quelconque des revendications 1 à 4,
**caractérisé en ce qu'**une couche (32) thermoconductrice est disposée entre la/chaque zone d'appui (28) de l'élément de recouvrement (14) et le composant semi-conducteur (30).

6. Ventilateur selon l'une quelconque des revendications 1 à 5,
**caractérisé en ce que** le carter auxiliaire (8) est réalisé sous la forme d'une pièce moulée en une matière plastique, dans lequel l'élément de recouvrement (14) métallique fait office, par sa liaison au carter auxiliaire (8), d'élément de renfort mécanique.

7. Ventilateur selon l'une quelconque des revendications 1 à 6,
**caractérisé par** une configuration sous la forme d'un ventilateur radial, dans lequel la roue de ventilateur (4) est réalisée sous la forme d'un rotor de ventilateur radial et le carter de ventilateur (2) est réalisé sous la forme d'un carter en spirale comprenant une paroi périphérique (34) renfermant le rotor de ventilateur (4), au moins une ouverture axiale d'écoulement entrant (36) et une ouverture tangentielle d'élection par soufflage (38), et dans lequel la paroi périphérique (34) s'étend à la manière d'une spirale d'un rayon de plus petite taille jusqu'à un rayon de plus grande taille.

8. Ventilateur selon la revendication 7,
**caractérisé en ce que** le carter auxiliaire (8) est disposé dans une zone de la paroi périphérique (34), qui est, avec un rayon de plus petite taille, adjacente à l'ouverture d'éjection par soufflage (38).

9. Ventilateur selon l'une quelconque des revendications 1 à 8,
**caractérisé en ce que** le carter auxiliaire (8) présente une structure à forme allongée s'étendant de manière parallèle à l'axe de rotation de la roue de ventilateur (4), sur toute la largeur, mesurée de manière axiale, du carter de ventilateur (2), dotée de deux côtés frontaux se faisant face.

10. Ventilateur selon la revendication 9,
**caractérisé en ce que** le carter auxiliaire (8) présente, dans la zone de ses deux côtés frontaux se faisant face, respectivement un élément de branchement électrique (40, 42), d'une part pour des lignes de branchement extérieures et d'autre part pour des lignes de moteur menant au moteur électrique (6).

11. Ventilateur selon l'une quelconque des revendications 1 à 10,
**caractérisé en ce que** le carter auxiliaire (8) est réalisé, vu dans une section transversale perpendiculaire par rapport à l'axe de rotation de la roue de ventilateur (4), de manière à présenter une forme triangulaire avec deux parois (44, 46) disposées à angle droit l'une par rapport à l'autre et avec une ouverture recouverte par l'élément de recouvrement (14).

12. Ventilateur selon l'une quelconque des revendications 1 à 11,
**caractérisé en ce que** le carter auxiliaire (8) présente, aux fins de l'assemblage de montage au carter de ventilateur (2), au niveau d'un bord latéral, des appendices de maintien (50) destinés à venir en prise avec des ouvertures de maintien du carter de ventilateur (2) et, au niveau d'un bord latéral faisant face, des trous de vis (52) pour des vis de maintien.

13. Ventilateur selon l'une quelconque des revendications 1 à 12,
**caractérisé par** une configuration sous la forme d'un double ventilateur, dans lequel le moteur électrique (6) est disposé à l'extérieur du carter de ventilateur (2) de manière axial entre ce dernier et un deuxième ventilateur (1a) du même type, et dans lequel le moteur électrique (6) est relié, par l'intermédiaire de deux arbres coaxiaux opposés axialement, aux deux roues de ventilateur (4, 4a).

14. Ventilateur selon la revendication 13,
**caractérisé en ce que** le moteur électrique (6) est suspendu par l'intermédiaire d'un support (54) entre les deux carters de ventilateur (2, 2a).
